(19) Europäisches Patentamt
European Patent Office
Office européen des brevets

(11) **EP 4 661 278 A1**

(12) **EUROPEAN PATENT APPLICATION**
published in accordance with Art. 153(4) EPC

(43) Date of publication:
**10.12.2025 Bulletin 2025/50**

(21) Application number: **24749957.7**

(22) Date of filing: **17.01.2024**

(51) International Patent Classification (IPC):
**H02M 7/48** (2007.01)     **H02P 27/06** (2006.01)

(52) Cooperative Patent Classification (CPC):
**H02M 7/48; H02P 27/06**

(86) International application number:
**PCT/JP2024/001136**

(87) International publication number:
**WO 2024/162003 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.02.2023 JP 2023015668**

(71) Applicant: **DENSO CORPORATION
Kariya-city, Aichi 448-8661 (JP)**

(72) Inventors:
• **YAMADA, Tetsuya
Nisshin-city, Aichi 470-0111 (JP)**
• **SADA, Takeshi
Kariya-city, Aichi 448-8661 (JP)**
• **HORIHATA, Harumi
Kariya-city, Aichi 448-8661 (JP)**

(74) Representative: **TBK
Bavariaring 4-6
80336 München (DE)**

(54) **POWER COMMAND CONVERSION DEVICE, POWER COMMAND CONVERSION METHOD, AND POWER COMMAND CONVERSION PROGRAM**

(57) A power command conversion device is provided with a conversion unit and an output unit. The conversion unit is configured to convert a second output request value into a first output request value, based on a value of a voltage outputted from an inverter and the second output request value required by a second power supply target. The inverter has been used for supplying power to a first power supply target and the second power supply target is connected to the inverter and an inverter control device for controlling the inverter. The second power supply power is different from the first power supply target. In addition, the output unit is configured to output, to the inverter control device, the first output request value which has been converted by the conversion unit.

FIG.2

## Description

[Technical Field]

The present disclosure relates to a power command conversion device, a power command conversion method, and a power command conversion program.

[Cross-Reference to Related Applications]

The present application claims the benefit of priority from Japanese Patent Application No. 2023-015668 filed on February 3, 2023, the entire contents of which are incorporated herein by reference.

[Background Art]

Japanese Patent Application Publication No. 2008-43179 discloses a control device used in an electric vehicle, including: a conversion means for converting the voltage of a DC power source to generate a system voltage on a power line; and at least one motor drive unit (hereinafter referred to as "MG unit") comprising an inverter connected to the power line and an AC motor driven by the inverter. This control device is equipped with a system voltage control means that performs system voltage stabilization control by manipulating the power supplied to the power supply line to suppress fluctuations in the system voltage, and a current control means that independently controls the torque of the AC motor and the input power to the MG unit. In addition, the control device includes: a conversion power control means for executing conversion power control that controls the input power or output power (hereinafter referred to as "conversion power") of the conversion means; a conversion voltage control means for performing conversion voltage control that controls the output voltage of the conversion means; and a selection means that selects one of the conversion power control and the conversion voltage control to be executed, and when the execution of the conversion voltage control is selected, prohibits the execution of the system voltage stabilization control. The foregoing system voltage control means includes: a target power operation amount calculation means for calculating a target operation amount of power (hereinafter referred to as "target power operation amount") applied to the a foregoing power supply line; and a distribution means for distributing the target power operation amount calculated by the foregoing target power operation amount calculation means into an MG power operation amount command value for controlling the MG units and a conversion power operation amount correction value for controlling the conversion power. The conversion power control means controls the conversion power using the conversion power operation amount correction value distributed by the distribution means. Meanwhile, the current control means controls the MG unit using the MG power operation command value distributed by the distribution means.

[Summary of the Invention]

[Technical Problem]

In recent years, there has been a growing demand for realizing a circular economy. One solution to this demand is the need for inverters that connect generators and storage batteries for renewable energy to the power grid. A potential approach for this type of inverter is to reuse inverters that control the output of motors that drive hybrid vehicles.

However, an inverter for driving vehicle motors requires input of motor output requirements. For this reason, such inverters cannot be reused as inverters for connection to the power system.

The present disclosure is to provide a power command conversion device, a power command conversion method, and a power command conversion program which make it possible to reuse existing inverters in other devices.

[Solution to Problem]

A power command conversion device according to a first aspect of the present disclosure is provided with:

> a conversion unit configured to convert, into a first output request value required by a first power supply target, a second output request value required by a second power supply target which is different from the first power supply target, based on a voltage value of voltage outputted from an inverter and the second output request value, in which the second power supply target is connected to the inverter and an inverter control device is configured to control the inverter, the inverter previously used for supplying power to the first power supply target; and
> an output unit configured to output, to the inverter control device, the first output request value which has been converted by the conversion unit.

A power command conversion method according to a second aspect of the present disclosure enables at least one processor to perform processes including:

> a process that converts a second output request value into a first output request value, based on a value of a voltage outputted from an inverter and the second output request value required by a second power supply target, in which the inverter has been used for supplying power to a first power supply target and the second power supply target is connected to the inverter and an inverter control device for controlling the inverter, the second power supply power being different from the first power supply target; and
a process that outputs, to the inverter control device, the first output request value which has been converted.

A power command conversion program according to a third aspect of the present disclosure enables at least one processor to perform processes including:

a process that converts a second output request value into a first output request value, based on a value of a voltage outputted from an inverter and the second output request value required by a second power supply target, in which the inverter has been used for supplying power to a first power supply target and the second power supply target is connected to the inverter and an inverter control device for controlling the inverter, the second power supply power being different from the first power supply target; and
a process that outputs, to the inverter control device, the first output request value which has been converted.

[Effect of the Invention]

According to the present disclosure, it is possible to reuse existing inverters in other devices.

[Brief Description of the Drawings]

The above and other objects, technical features, and advantages of the present disclosure will become clearer with the following detailed description and reference to the accompanying drawings, in which:

FIG. 1 is a schematic diagram illustrating an inverter control system according to a first embodiment;
FIG. 2 is a block diagram illustrating an inverter control device and a power command conversion device, which are according to the first embodiment;
FIG. 3 is a graph showing a correspondence relationship provided between a torque command value and current command values;
FIG. 4 is a graph showing a correspondence relationship provided between a current command value and the torque command value;
FIG. 5 is a block diagram illustrating a hardware configuration of a power command conversion device according to a second embodiment;
FIG. 6 is a flowchart explaining a power command conversion process performed in the second embodiment;
FIG. 7 is a block diagram illustrating an inverter control device and a power command conversion device, which are according to a third embodiment; and
FIG. 8 is a block diagram illustrating an inverter control device and a power command conversion device, which are according to a fourth embodiment.

[Description of the Embodiments]

With reference to the accompanying drawings, various embodiments for the present disclosure will now be described.

<First Embodiment>

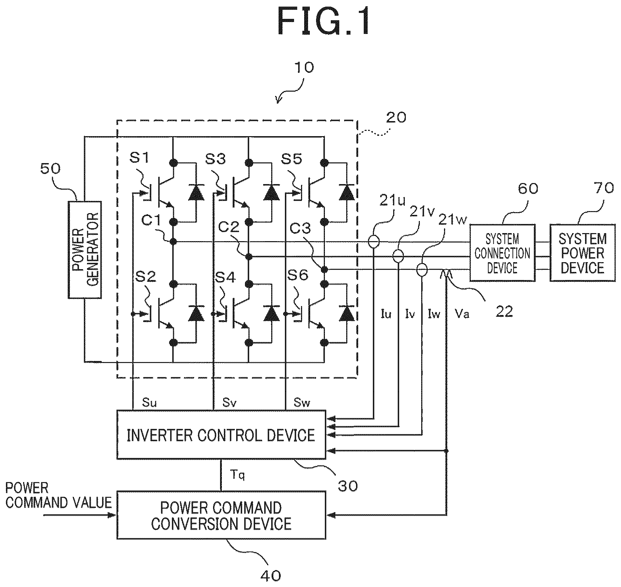

As shown in FIG. 1, an inverter control system 10 according to the present embodiment is provided with an inverter 20, an inverter control device 30, and a power command conversion device 40.
The inverter 20 in the present embodiment is provided as a driving inverter that drives an electric motor used to drive vehicles such as hybrid vehicles, plug-in hybrid vehicles, and electric vehicles. It should be noted that the motors used to drive the vehicles represent a first power supply target.
The inverter 20 is configured to be controlled by the inverter control device 30. In the present embodiment, an inverter and an inverter control device, both of which were once installed in a vehicle and used to drive a motor for driving the vehicle, are assigned to the inverter 20 and the inverter control device 30.
In the present embodiment, the inverter 20 is not used to drive the motor for driving the vehicle, but is used to supply power to other power supply targets. Specifically, as shown in FIG. 1, the inverter 20 is configured to convert the DC voltage supplied by a power generator 50 into a three-phase AC voltage and supplies the converted three-phase AC voltage to a system power device 70 via a system connection device 60.
The power generator 50 may be a power generation device that generates electricity using renewable energy, such as solar power, but is not limited thereto.
In the current embodiment, the inverter 20 and the inverter control device 30, which were previously used for driving the vehicle, are reused for driving the power supply to the system power device 70. Thus, it is noted that the system power device 70 exemplifies a second power supply target in the current embodiment.
The inverter 20 includes, for example, six switching elements S1 to S6. To be specific, the inverter 20 is configured such that the switching element S1 and the switching element S2 are connected in series, the switching element S3 and the switching element S4 are connected in series, and the switching element S5 and the switching element S6 are connected in series, and such serially connected element circuits are connected in parallel.
In addition, a connection point C1, which connects the switching elements S1 and S2, is also connected to the system connection device 60. Similarly, the connection point C2, which connects the switching elements S3 and S4, is also connected to the system connection device 60, and the connection point C3, which connects the switching elements S5 and S6, is also connected to the system connection device 60.

When it is not necessary to refer to the switching elements S1 to S6 as mutually distinguished elements, all the switching elements may be referred to as a switching element S in a more straightforward manner. As the switching elements S, for example, IGBT (Insulated Gate Bipolar Transistor) elements may be used, but the switching elements S are not limited to this IGBT element.

The switching actions of the switching elements S are controlled by the inverter control device 30. Specifically, the inverter control device 30 controls the switching actions of the switching elements S1 and S2 by a switching control signal Su. In addition, the inverter control device 30 controls the switching actions of the switching elements S3 and S4 by a switching control signal Sv. The inverter control device 30 controls the switching actions of the switching elements S5 and S6 by a switching control signal Sw.

DC voltage is supplied to the inverter 20 from the power generator 50. The Inverter control device 30 is configured to switch, element by element, the switching actions of the switching elements S1 to S6. As a result, the inverter 20 is configured to convert the DC voltage supplied by the power generator 50 into a three-phase AC voltage and output the converted three-phase AC voltage to the system connection device 60.

The current values Iu, Iv, and Iw of the three-phase AC currents flowing in the inverter are detected by current sensors 21u, 21v, and 21w, respectively, and outputted to the inverter control device 30. Additionally, the voltage output from the connection point C3 to the system connection device 60 is detected by a voltage sensor 22. The voltage value Va of the detected voltage is outputted to both the inverter control device 30 and the power command conversion device 40.

The power command conversion device 40 is configured to generate a torque command value Tq based on both of an output request value, i.e., a power command value, required for the power output from the system power device 70, and a voltage value Va detected by the voltage sensor 22, and output the generated torque command value Tq to the inverter control device 30.

As explained, the inverter 20 and the inverter control device 30 were previously used for driving the vehicle motors. Thus, the inverter control device 30 is specified such that the inverter control device 30 is originally designed to receive the motor torque command value as its input request value. Using such specification, the power command conversion device 40 is thus configured to convert the power command value for the system power device 70 into a torque command value for the motor and output the converted torque command value to the inverter control device 30. In the present embodiment, it is noted that the torque command value serves as an example of the first output request value, while the power command value serves as an example of the second output request value.

The inverter control device 30 performs feedback control to the inverter by switching the switching elements S1 to S6 in a controlled manner, based on the current values Iu, Iv, and Iw of the three-phase AC currents and the voltage value Va.

The specific configurations of both the inverter control device 30 and the power command conversion device 40 will be described.

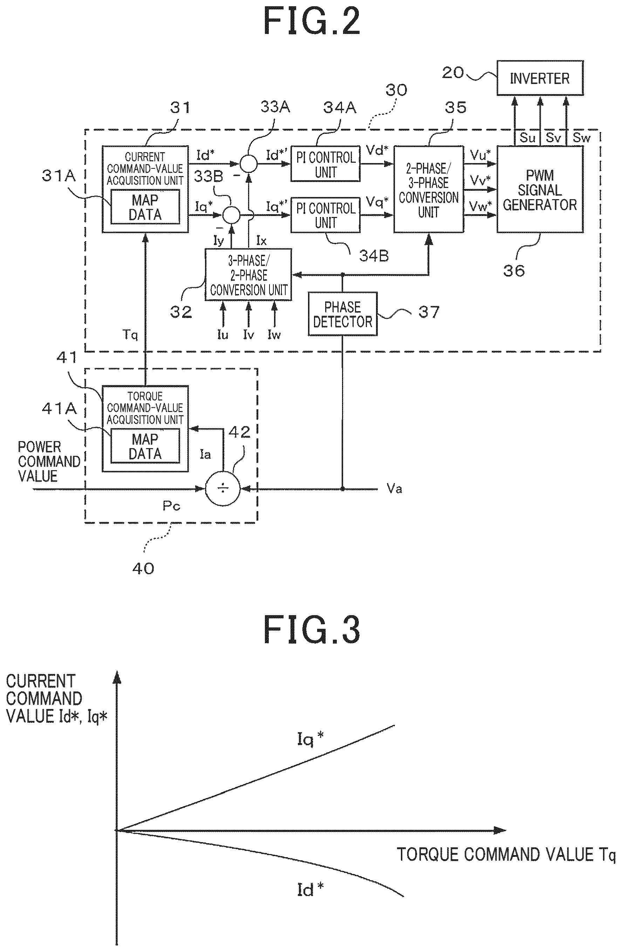

As shown in FIG. 2, the inverter control device 30 is provided with a current command-value acquisition unit 31, a 3-phase/2-phase converter 32, subtractors 33A and 33B, PI controllers 34A and 34B, a 2-phase/3-phase converter 35, a PWM signal generator 36, and a phase detector 37.

The current command-value acquisition unit 31 stores therein map data 31A. The map data 31A is provided as table data that represents correspondence relationships among, for example, as shown in FIG. 3, a torque command value serving as an output request value of the motor of a vehicle to which the inverter 20 was originally connected, a d-axis current command value Id*, and a q-axis current command value Iq*. The map data 31A is an example of first map data. Incidentally, the map data 31A may be writable from an external device.

The current command-value acquisition unit 31 acquires, by referring to the map data 31A, a d-axis current command value Id* and a q-axis current command value Iq* corresponding to a torque command value inputted from the power command conversion device 40. Then, the current command-value acquisition unit 31 outputs the acquired d-axis current command value Id* to the subtractor 33A and outputs the acquired q-axis current command value Iq* to the subtractor 33B.

Based on the current values Iu, Iv, and Iw detected by the current sensors 21u, 21v, and 21w and the phase of the voltage Va inputted from the phase detector 37, the 3-phase/2-phase converter 32 is configured to convert the three-phase current values Iu, Iv and Iw into 2-phase currents Ix and Iy, and then output the converted currents Ix and Iy to the subtractors 33A and 33B, respectively.

The subtractor 33A subtracts a current value Ix outputted from the 3-phase/2-phase converter 32 from a d-axis current command value Id* inputted from the current command value acquisition unit 31. Accordingly, the subtractor 33A calculates a d-axis current command value Id*' and outputs the calculated d-axis current command value Id*' to the PI controller 34A.

The subtractor 33B subtracts a current value Iy outputted from the 3-phase/2-phase converter 32 from a q-axis current command value Iq* inputted from the current command value acquisition unit 31. Accordingly, the subtractor 33B calculates a q-axis current command value Iq*', and outputs the calculated q-axis current command value Iq*' to the PI controller 34B.

The PI controller 34A converts the d-axis current command value Id*' inputted from the subtractor 33A into a voltage command value Vd* according to PI control (proportional-integral control) scheme and then outputs the converted voltage command value Vd* to the 2-phase/3-phase converter 35.

In addition, the PI controller 34B converts the q-axis current command value Iq*' inputted from the subtractor 33B into a voltage command value Vq* according to PI control scheme and then outputs the converted voltage command value Vq* to the 2-phase/3-phase converter 35.

By using the phase of the voltage Va inputted from the phase detector 37, the 2-phase/3-phase converter 35 converts the voltage command values Vd* and Vq* inputted from the PI controllers 34A and 34B into three-phase voltage command values Vu*, Vv*, and Vw*. And then, the 2-phase/3-phase converter 35 outputs the converted voltage command values Vu*, Vv*, and Vw* to the PWM signal generator 36.

The PWM signal generator 36 is configured to generate switching control signals Su, Sv, and Sw required for switching control of the inverter 20 with use of the voltage command values Vu*, Vv*, and Vw*, and output the generated switching control signals Su, Sv, and Sw to the inverter 20. The switching control signals Su, Sv, and Sw are generated as pulse width modulated (PWM) signals.

The phase detector 37 detects the phase of the voltage detected by the voltage sensor 22 and outputs the detected voltage phase to the 3-phase/2-phase converter 32 and the 2-phase/3-phase converter 35.

Furthermore, as shown in FIG. 2, the power command conversion device 40 is provided with a torque command-value acquisition unit 41 and a division unit 42.

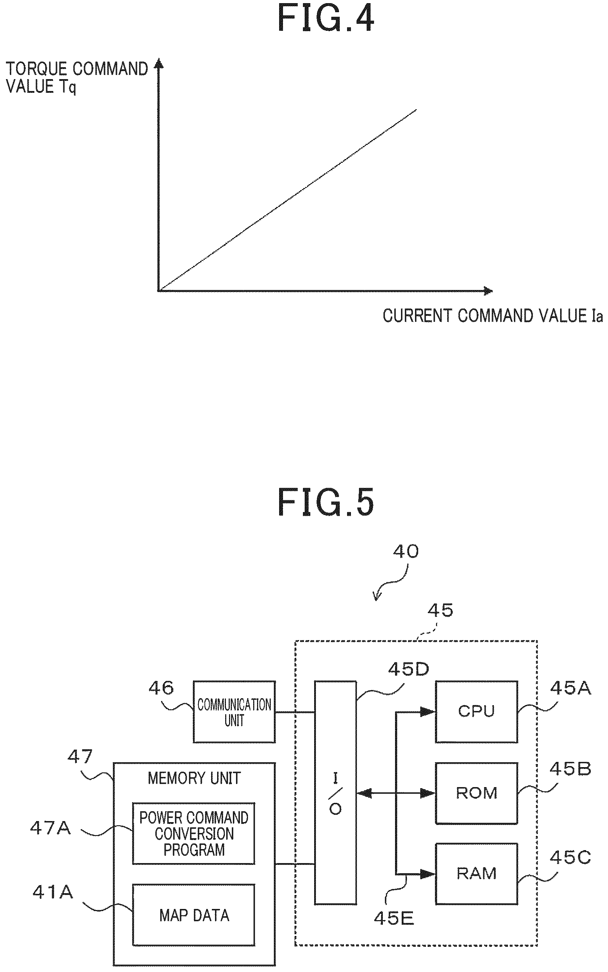

The torque command-value acquisition unit 41 includes a map data 41A represented by the inverse function of map data 31A stored in the current command value acquisition unit 31 of the inverter control device 30. Specifically, as shown in FIG. 4, the map data 41A can be provided as table data representing a correspondence relationship between current command values Ia and torque command values Tq. The map data 41A is an example of second map data. As a modification, it should be noted that the map data 41A can be writable by an external device provided externally to this system. Incidentally, the torque command-value acquisition unit 41 exemplifies a configuration that functionally includes a conversion unit, an output unit, and an output request value acquisition unit.

The division unit 42 is configured to calculate a current command value Ia by dividing the power command value Pc inputted from an upper-level device (not shown in the figure) by the voltage value Va detected by, for example, the voltage sensor 22. Instead of using the voltage value Va detected by voltage sensor 22 for this division, the current command value Ia may be calculated using an arbitrarily set voltage command value Va. The division unit 42 is also configured to output the calculated current command value Ia to the torque command-value acquisition unit 41. In the present embodiment, the current command value Ia is expressed by the following equation:

$$Ia = (Id^{*2} + Iq^{*2})^{1/2} \ ... \ (1).$$

As described, in the present embodiment, the power command conversion device 40 is able to acquire a torque command value Tq corresponding to the inputted power command value and output the acquired torque command value Tq to the current command-value acquisition unit 31 of the inverter control device 30. This enables the existing inverter 20, which was originally intended for driving the vehicle motors, to be reused for the system power device 70. In addition, since only the power command conversion device 40 needs to be added to the current system, there is no need to modify the configurations of the inverter 20 and the inverter control device 30.

<Second Embodiment>

A second embodiment will be described. In the description of the second embodiment, the same reference numerals are used for the same parts as those employed in the first embodiment, with detailed descriptions omitted.

In the second embodiment, a power command conversion device 40 is provided, which is configured to generate a torque command value Tq through software processing and output the generated torque command value Tq to the inverter control device 30.

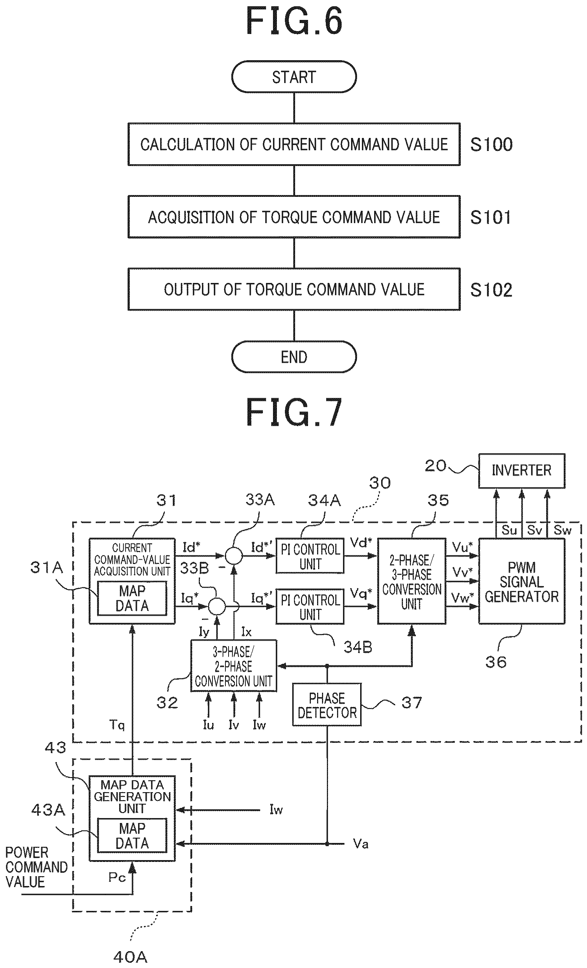

FIG. 5 is a block diagram illustrating the hardware configuration of the power command conversion device 40. As shown in FIG. 6, the power command conversion device 40 is equipped with a controller 45.

The controller 45 is provided with a CPU (Central Processing Unit) 45A, a ROM (Read-Only Memory) 45B, a RAM (Random Access Memory) 45C, and an I/O (Input/Output) interface 45D. The CPU 45A, ROM 45B, RAM 45C, and I/O 45D are each connected via a bus 45E in the controller 45. Specifically, the bus 45E is composed of various types of buses, including a control bus, an address bus, and a data bus. The I/O 45D is connected to a communication unit 46 and a memory unit 47, both of which are placed outside the controller 45.

The communication unit 46 is provided as an interface for data communication with devices such as an inverter control device 30.

The memory unit 48 is provided with a non-volatile memory, for example. As illustrated in FIG. 5, the memory unit 47 stores therein data and information, which include a power command conversion program 47A and the map data 41A.

The CPU 45A adopted in the present embodiment is exemplified as a processor. The term "processor" here refers to a broad class of processors, including general-purpose processors (e.g., CPUs) and specialized processors (e.g., GPUs, Graphics Processing Units; ASICs, Application-Specific Integrated Circuits; FPGAs, Field-Programmable Gate Arrays; and programmable logic devices).

For example, the power command conversion program 47A may be installed in the power command conversion device 40 as appropriate, in which the program 47A is stored in a non-volatile and non-transitory recording medium or distributed via a network.

Examples of the non-volatile and non-transitory recording media include a CD-ROM (Compact Disc Read-Only Memory), an optical magnetic disk, an HDD (Hard Disk Drive), a DVD-ROM (Digital Versatile Disc Read-Only Memory), a flash memory, or a memory card.

With reference to FIG. 6, a flowchart of the power command conversion process performed by the CPU 45A of the power command conversion device 40 will be explained. The power command conversion process shown in FIG. 6 is performed by the CPU 45A, which reads and executes the power command conversion program 47A stored in the memory unit 47. The process shown in FIG. 6 is performed repeatedly.

In step S100, the CPU 45A, which functions as the division unit 42, divides a power command value Pc inputted from an upper device (not shown) by a voltage value Va detected by the voltage sensor 22. Thus, this division calculates a current command value Ia. Alternatively, the current command value Ia may be calculated using an arbitrarily set voltage command value Va, instead of using the voltage value Va detected by the voltage sensor 22.

In step S101, the CPU 45A functions as the torque command-value acquisition unit 41. In other words, the CPU 45A acquires a torque command value Tq corresponding to the current command value Ia acquired in step S100 by referring to the map data 41A.

In step S102, the CPU 45A, which functions as the torque command-value acquisition unit 41, outputs the current command value Ia acquired in step S101 to the inverter control device 30.

In the present embodiment, the CPU 45A of the power command conversion device 40 reads and executes the power command conversion program 47A stored in the memory unit 47. Thus, the power command conversion process is performed. As a result, the torque command value Tq corresponding to the power command value Pc is outputted to the inverter control device 30. Therefore, the existing inverter 20, which was previously used for driving the vehicle motors, can now be reused for the system power device 70.

<Third Embodiment>

A third embodiment will be described in which the same or identical elements in this embodiment to or as those employed in the first embodiment will be referred to by the same reference numbers, and detailed descriptions thereof are omitted.

In the first embodiment, as described, the power command conversion device 40 is equipped with the map data 41A, which represents the inverse function of the map data 31A stored in the current command-value acquisition unit 31 of the inverter control device 30. On the other hand, the inverter control device 30 is a reused product that was previously used for driving the vehicle motors. Hence, the contents of the map data 31A may be unknown in some cases.

With consideration of such an issue, compared to the power command conversion device 40 shown in FIG. 2, the torque command-value acquisition unit 41 and the division unit 42 are replaced with a power command conversion device 40A according to the present embodiment, which is shown in FIG. 7, is provided with a map data generation unit 43.

The map data generation unit 43 is configured to store therein map data 43A. The map data 43A is provided as table data that represents a correspondence relationship between power command values Pc and torque command values Tq. Since the contents of the map data 31A are unknown in the present embodiment, the map data 43A, which represents correspondence relationships between power command value Pc and torque command value Tq that have been predetermined, is stored therein in advance. Additionally, the map data generation unit 43 receives current values Iw detected by the current sensor 21w and voltage values Va detected by the voltage sensor 22. Based on the inputted current values Iw and voltage values Va, the map data generation unit 43 is configured to calculate an actual power value Pc'. Then, the power command value Pc in the map data 43A is replaced with the actual power value Pc'. This process is performed repeatedly, thereby sequentially updating the map data 43A.

As described, in the present embodiment, the map data generation unit 43 calculates the power value Pc' based on the current value Iw and the voltage value Va and updates the map data 43A based on the calculated power value Pc'. Therefore, even if the contents of the map data 31A of the inverter control device 30 are unknown, the contents of the map data 43A can be produced by itself.

<Fourth Embodiment>

A fourth embodiment will now be described, in which the same or identical elements installed in this embodiment to or as those employed in the first embodiment will be referred to the same reference numbers, and detailed descriptions thereof are omitted.

In a system configuration in which the inverter 20 is employed as a system-connected inverter, if an abnormality occurs in the system power device 70 which shuts down an upper system, it is necessary, for safety reasons, to detect such shut-down operations of the upper system and stop the operations to prevent the inverter 20 from operating independently (i.e., independent-operation preventing function).

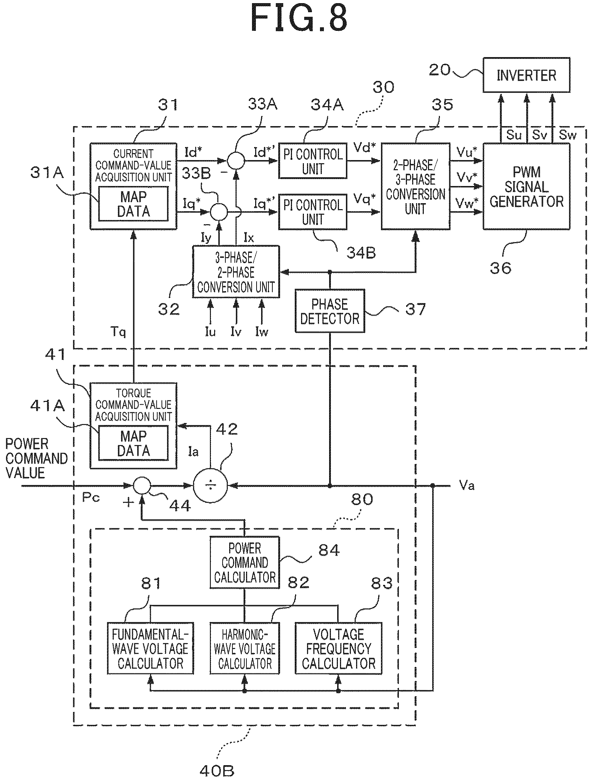

Hence, as shown in FIG. 8, the power command conversion device 40B according to the present embodiment is provided with a voltage-fluctuation detecting unit 80 and an addition unit 44 which realize functions for preventing the inverter 20 from operating independently.

As shown in FIG. 8, the voltage-fluctuation detecting unit 80 is provided with a fundamental-wave voltage calculator 81, a harmonic-wave voltage calculator 82, a voltage frequency calculator 83, and a power command calculator 84.

The fundamental-wave voltage calculator 81 is configured to calculate a fundamental wave component of the voltage value Va detected by the voltage sensor 22.

The harmonic-wave voltage calculator 82 is configured to calculate harmonic components of the voltage value Va detected by the voltage sensor 22.

The voltage frequency calculator 83 is configured to calculate frequency components of the voltage value Va detected by the voltage sensor 22.

The power command calculator 84 is configured to determine whether at least one of the degree of changes caused in the fundamental wave component of the voltage value Va calculated by the fundamental-wave voltage calculator 81, the harmonic components of the voltage value Va calculated by the harmonic-wave voltage calculator 82, and the frequency components of the voltage value Va calculated by the voltage frequency calculator 83 is equal to or greater than a predetermined threshold value. By this determination, it is possible to check whether the upper system has been disconnected. In addition, the power command calculator 84 is also configured to calculate a power command value that causes reactive power to increase, based on at least one of the degree of changes caused in the fundamental wave component of the voltage value Va, the harmonic components of the voltage value Va calculated by the harmonic-wave voltage calculator 82, and the frequency components of the voltage value Va calculated by the voltage frequency calculator 83, and output the calculated power command value to the addition unit 44. The addition unit 44 is configured to add the power command value calculated by the power command calculator 84 to a power command value Pc inputted from an upper-level device (not shown in the figure), and outputs, to the division unit 42, a summed value obtained by the addition. As a result, a torque command value Tq that causes the reactive power to increase is outputted from the torque command-value acquisition unit 41, thereby improving the accuracy of detecting abnormalities such as upper system disconnections and efficiently preventing the inverter 20 from being operated independently.

The present disclosure described so far is not limited to the foregoing embodiments, while various other modifications and applications are possible within the scope of the present disclosure.

In addition, the configuration of the inverter control system 10 described in the foregoing embodiments has been explained just as an example, and instead of such a configuration, it goes without saying that unnecessary parts or elements may be omitted or new parts or elements may be added within the scope of the present disclosure.

Moreover, the processing flow of the power command conversion program 47A described in the second embodiment (refer to FIG. 6) is also provided just as an example, and it goes without saying that unnecessary steps may be deleted, new steps may be added, or the processing order may be changed within the scope of the present disclosure.

The control units and methods described in the present disclosure may be implemented by a dedicated computer provided with a processor programmed to perform one or more functions embodied in a computer program. Alternatively, the devices and methods described in the present disclosure may be implemented by a dedicated computer provided with a processor configured by dedicated hardware logic circuits. Still alternatively, the devices and methods described herein may be implemented by one or more dedicated computers including a processor and one or more hardware logic circuits configured to execute computer programs. As another alternative, the computer programs, which are instructions executable by a computer, may be stored in a computer-readable non-transitory tangible medium.

The following supplementary notes are also provided regarding the technology disclosed herein.

<Supplementary notes>

(Supplementary note 1)

There is provided a power command conversion device including:

> a conversion unit configured to convert, into a first output request value required by a first power supply target, a second output request value required by a second power supply target which is different from the first power supply target, based on a voltage value of voltage outputted from an inverter and the second output request value, in which the second power supply target is connected to the inverter and an inverter control device is configured to control the inverter, the inverter previously used for supplying power to the first power supply target; and
> an output unit configured to output, to the inverter control device, the first output request value which has been converted by the conversion unit.

(Supplementary note 2)

In the power command conversion device according to supplementary note 1,

the inverter control device stores first map data representing a correspondence relationship between the first output request value and current command values for controlling the inverter, and the conversion unit includes:

a division unit that stores second map data represented as an inverse function of the first map data and calculates a current value by dividing the second output request value by the voltage value; and
an output request value acquisition unit that acquires, from the second map data, the first output request value corresponding to the second output request value.

(Supplementary note 3)

In the power command conversion device according to supplementary note 2, the first and second map data are writable by an external device.

(Supplementary note 4)

In the power command conversion device according to supplementary note 1, the conversion unit generates map data representing a correspondence relationship between the first output request value and the second output request value, based on the second output request value and a voltage and a current outputted from the inverter, and acquires the map data from the first output request value corresponding to the second output request value.

(Supplementary note 5)

In the power command conversion device according to any one of supplementary notes 1 to 4, the power command conversion device further includes:

at least one calculator designated among a fundamental-wave voltage calculator that calculates a fundamental-wave component of a voltage outputted from the inverter, a harmonic-wave voltage calculator that calculates a harmonic component of the voltage, and a voltage frequency component calculator that calculates a frequency component of the voltage;
a power command calculator that determines whether the second power supply target has been disconnected by determining whether a degree of changes in at least one of the fundamental-wave component, the harmonic component, and the frequency component is equal to or larger than a predetermined threshold, and calculates a power command value which increases reactive power so as to prevent the inverter from operating independently when it is determined that the second power supply target has been disconnected; and
an addition unit that adds the second output request value to the power command value and outputs, to the conversion unit, a summed value obtained by the addition.

(Supplementary note 6)

In the power command conversion device according to any one of supplementary notes 1 to 5, the first power supply target is a motor for driving a vehicle.

(Supplementary note 7)

In the power command conversion device according to any one of supplementary notes 1 to 6, the second power supply target is a system power device.

(Supplementary note 8)

There is provided a power command conversion method enabling at least one processor to perform processes including:

a process that converts a second output request value into a first output request value, based on a value of a voltage outputted from an inverter and the second output request value required by a second power supply target, in which the inverter has been used for supplying power to a first power supply target and the second power supply target is connected to the inverter and an inverter control device for controlling the inverter, the second power supply power being different from the first power supply target; and
a process that outputs, to the inverter control device, the first output request value which has been converted.

(Supplementary note 9)

There is provided a power command conversion program enabling at least one processor to perform processes including:

a process that converts a second output request value into a first output request value, based on a value of a voltage outputted from an inverter and the second output request value required by a second power supply target, in which the inverter has been used for supplying power to a first power supply target and the second power supply target is connected to the inverter and an inverter control device for controlling the inverter, the second power supply power being different from the first power supply target; and
a process that outputs, to the inverter control device, the first output request value which has been con-

verted.

**Claims**

1. 1. A power command conversion device (40) comprising:

   a conversion unit (41) configured to convert, into a first output request value required by a first power supply target, a second output request value required by a second power supply target (70) which is different from the first power supply target, based on a voltage value of voltage outputted from an inverter (20) and the second output request value, wherein the second power supply target is connected to the inverter and an inverter control device (30) is configured to control the inverter, the inverter previously used for supplying power to the first power supply target; and
   an output unit (41) configured to output, to the inverter control device, the first output request value which has been converted by the conversion unit.

2. 2. The power command conversion device according to claim 1, wherein

   the inverter control device stores first map data representing a correspondence relationship between the first output request value and current command values for controlling the inverter, the power command conversion device stores second map data represented as an inverse function of the first map data, and the conversion unit comprises:

   a division unit (42) that calculates a current value by dividing the second output request value by the voltage value; and
   an output request value acquisition unit (41) that acquires, from the second map data, the first output request value corresponding to the second output request value.

3. 3. The power command conversion device according to claim 2, wherein the first and second map data are writable by an external device.

4. 4. The power command conversion device according to claim 1, wherein the conversion unit generates map data representing a correspondence relationship between the first output request value and the second output request value, based on the second output request value and a voltage and a current outputted from the inverter, and acquires the map data from the first output request value corresponding to the second output request value.

5. 5. The power command conversion device according to claim 1, further comprising:

   at least one calculator designated among a fundamental-wave voltage calculator (81) that calculates a fundamental-wave component of a volage outputted from the inverter, a harmonic-wave voltage calculator (82) that calculates a harmonic component of the voltage, and a voltage frequency component calculator (83) that calculates a frequency component of the voltage;
   a power command calculator (84) that determines whether the second power supply target has been disconnected by determining whether a degree of changes in at least one of the fundamental-wave component, the harmonic component, and the frequency component is equal to or larger than a predetermined threshold, and calculates a power command value which increases reactive power so as to prevent the inverter from operating independently when it is determined that the second power supply target has been disconnected; and
   an addition unit (44) that adds the second output request value to the power command value and outputs, to the conversion unit, a summed value obtained by the addition.

6. 6. The power command conversion device according to claim 1, wherein the first power supply target is a motor for driving a vehicle.

7. 7. The power command conversion device according to any one of claims 1 to 6, wherein the second power supply target is a system power device.

8. 8. A power command conversion method enabling at least one processor to perform processes including:

   a process that converts a second output request value into a first output request value, based on a value of a voltage outputted from an inverter and the second output request value required by a second power supply target, wherein the inverter has been used for supplying power to a first power supply target and the second power supply target is connected to the inverter and an inverter control device for controlling the inverter, the second power supply power being different from the first power supply target; and
   a process that outputs, to the inverter control device, the first output request value which has been converted.

9. 9. A power command conversion program enabling

**EP 4 661 278 A1**

at least one processor to perform processes including:

a process that converts a second output request value into a first output request value, based on a value of a voltage outputted from an inverter and the second output request value required by a second power supply target, wherein the inverter has been used for supplying power to a first power supply target and the second power supply target is connected to the inverter and an inverter control device for controlling the inverter, the second power supply power being different from the first power supply target; and

a process that outputs, to the inverter control device, the first output request value which has been converted.

# FIG.1

# FIG.2

# FIG.3

# FIG.4

# FIG.5

# FIG.6

START

CALCULATION OF CURRENT COMMAND VALUE | S100

ACQUISITION OF TORQUE COMMAND VALUE | S101

OUTPUT OF TORQUE COMMAND VALUE | S102

END

# FIG.7

# EP 4 661 278 A1

# FIG.8

15

## INTERNATIONAL SEARCH REPORT

International application No.

**PCT/JP2024/001136**

| A. | CLASSIFICATION OF SUBJECT MATTER |
|---|---|

*H02M 7/48*(2007.01)i; *H02P 27/06*(2006.01)i
FI:  H02M7/48 R; H02P27/06

According to International Patent Classification (IPC) or to both national classification and IPC

| B. | FIELDS SEARCHED |
|---|---|

Minimum documentation searched (classification system followed by classification symbols)

H02M7/48; H02P27/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2022-146409 A (TOYOTA JIDOSHA KABUSHIKI KAISHA) 05 October 2022 (2022-10-05) | 1, 4, 6-9 |
|  | paragraphs [0020]-[0052], [0061], fig. 1, 4-6 |  |
| Y |  | 5, 7 |
| A |  | 2-3 |
| Y | JP 2015-220835 A (SHARP KABUSHIKI KAISHA) 07 December 2015 (2015-12-07) | 5, 7 |
|  | paragraphs [0017]-[0043], fig. 1, 6-7 |  |
| A | JP 2022-139804 A (TOYOTA JIDOSHA KABUSHIKI KAISHA) 26 September 2022 (2022-09-26) | 1-9 |
|  | paragraphs [0015]-[0043], fig. 1-4 |  |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/001136**

| Patent document cited in search report | | | Publication date (day/month/year) | Patent family member(s) | Publication date (day/month/year) |
|---|---|---|---|---|---|
| JP | 2022-146409 | A | 05 October 2022 | US 2022/0302866 A1 paragraphs [0026]-[0056], [0065], fig. 1, 4-6 DE 102022106337 A1 CN 115117938 A | |
| JP | 2015-220835 | A | 07 December 2015 | (Family: none) | |
| JP | 2022-139804 | A | 26 September 2022 | US 2022/0294464 A1 paragraphs [0020]-[0048], fig. 1-4 DE 102022105632 A1 CN 115085249 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023015668 A

- JP 2008043179 A